# NEW EUROPEAN PATENT SPECIFICATION

(11) **EP 2 578 119 B2**
(45) Date of publication and mention of the opposition decision: **20.04.2022**
(45) Mention of the grant of the patent: 16.09.2015
(21) Application number: 11184078.1
(22) Date of filing: 06.10.2011
(51) Int. Cl.: A47J 31/40, A47J 31/60, A23G 9/04, A23G 9/30

(54) **Beverage production machine and method**
Getränkeherstellungsmaschine und Verfahren
Machine de production de boissons et procédé

(43) Date of publication of application: 10.04.2013
(73) Proprietor: Société des Produits Nestlé S.A., 1800 Vevey (CH)
(72) Inventor: Guidorzi, Sara, 44035 Formignana (Ferrara) (IT); Ricco, Massimilliano, 43123 Parma (IT)
(74) Representative: Lumsden, Stuart Edward Henry

(56) References cited:
- US-A1- 2006 081 653
- US-B1- 6 705 106
- US-B1- 6 990 391

## Description

The present invention relates to a beverage production machine, a corresponding beverage production method, and a container for a product, from which a beverage is produced. In particular the beverage production is directed to the production of liquid or semi-liquid cooled or frozen beverages. In particular the beverage production machine can identify a product retained in a suitable container through a wireless identification process, preferably by radio frequency identification, RFID, and can monitor the shelf-life of the product, in order to improve the hygiene of the beverage production.

Existing solutions for producing cooled or frozen liquid or semi-liquid beverages, like ice cream, ice coffee drinks, ice chocolate drinks, frozen cream, frozen yoghurt, sorbets, frappes and the like, typically comprise a device that has a reservoir, into which a premixed product, from which the beverages are produced, is filled, a refrigerating device for cooling or freezing the product, and a dispenser for dispensing portions of the product as the ready-to-drink beverages. The reservoir can typically be removed from the device for refilling or cleaning purposes.

Since typically a large amount of the product is filled into the reservoir, for example a volume as large as 51 or more, and since the portions of the product will thus be dispensed over a prolonged period of time, problems with hygiene or with the expiration date (or shelf-life) of the product can occur. In particular, if the temperature of the product is not constantly kept low enough, for example because the machine is shut down at night and is only activated again the next morning, it is possible that the product in the reservoir becomes spoiled. Since the containers, in which the premixed product is purchased, often hold a larger volume than the volume of the reservoir, or are reused a refilling from the same container has to be carried out. Hygiene issues can occur, if between the refilling steps of the product, the reservoir is not properly cleaned, or if the shelf-life of the product expires.

Another problem in existing solutions is that different products could be filled into a beverage production device by different persons, wherein the expiration date or shelf-life of the products could be confused or forgotten. US 6,286,724 B1 therefore suggests a cold drink system for chilling a product, wherein the system has a reservoir, named a hopper, for retaining a quantity of the product. A dispensing faucet is connected to the hopper for dispensing portions of the product. Further, a lock structure is provided that can be removed only by an authorized person. However, such a lock structure is very inconvenient to use, and does not prevent that accidentally a product is filled into the device, which has not been unambiguously identified previously (e.g. a self-mixed product) or whose shelf-life is unknown.

To identify a product, and to guarantee that the storage of the product and the preparation of beverages are carried out at optimum conditions, for example EP 2 082 649 A2 suggests monitoring the temperature of the product in the reservoir. Through an analysis of the temperature profile, the product can be identified. Additionally a user can enter settings and identification information of the product into the machine. However, the temperature monitoring and the temperature control cannot unambiguously identify the product, and do not prevent a product, whose shelf-life has already expired, from being filled into the reservoir. In this case even the temperature control cannot improve or maintain a proper hygiene.

To improve the freshness of a beverage, WO 2008/004144 A2 discloses a beverage dispensing device for making a chilled beverage that is equipped with a freshness indicator. The beverage is held in a container, can be cooled, mixed and dispensed via a tapping device. The machine comprises a display for indicating the storage temperature, the maximum storage period, the actual freshness of the beverage, the time left until expiry of the freshness and/or the date of the expiry of the freshness. To obtain the indication data the machine comprises an input unit for inputting, for example, the date of expiry, comprises means to record any replacement of the beverage container, so as to calculate the time that the beverage is already held in the container, and comprises a temperature sensor for measuring the storage temperature of the beverage. A signal processing unit can calculate, depending on the recorded storage temperature and based on the stored freshness criteria, the actual freshness of the beverage. However, the user is responsible for inputting the relevant parameters and mistakes or unauthorized inputs are possible. The beverage dispensing device is further not designed to clearly identify the product, and an update of the shelf-life or the expiry date of the product could be circumvented.

Further, the beverage dispensing device has only a freshness indicator, but proper cleaning and a supervision of hygienic standards is the responsibility of the user.

Another similar beverage production machine is known from US6705106B1.

The object of the present invention is to overcome the disadvantages of the existing solutions described above, and to provide a beverage production machine, a beverage production method, and a container for a product that allow for an improvement of the hygiene in the production of semi-liquid or liquid cooled or frozen beverages or liquid foods. In particular, the aim is to provide a way to prohibit any production of beverages, for which the shelf-life has expired. A further object of the invention is to provide a beverage machine, for which refilling procedure is more convenient.

The above objective problem can be solved by the independent claims of the present invention. The dependent claims further advantageously develop the invention.

In particular the present invention is directed to a beverage production machine according to claim 1.

Due to the fact that the product mode can only be activated, if the product is unambiguously identified, the machine can prevent that accidently or intentionally a spoiled product is filled into the machine and is used to prepare a beverage. The identification information and the shelf-life information are provided for example on an RFID chip or tag of a container, in which the product is purchased. The identification information and shelf-life information should be verified and authorized by the distributor of the product. Via the RFID reader the beverage production machine can be securely and easily provided with the shelf-life information, and the setting of the shelf-life counter prevents a portion of the product to be dispensed, if the shelf-life has expired. The user does not actively have to take the responsibility of monitoring the shelf-life of the product, but rather the machine provides an automatic monitoring function.

Specific identification information of a container holding a product, and the corresponding shelf-life information, can be used only once to open the machine for (re)filling and for starting a product mode cycle (a product mode cycle starts with the setting of the shelf-life counter and ends latest with the expiration of the shelf-life). It can be prevented that a container is refilled with an unknown liquid from the same container, from an already opened container, or with a spoiled product. The beverage production machine can be provided with specifically designed means that monitor the received identification information, and thus prevent a multiple usage of the same identification information. Due to the possibility to transmit the identification information and the shelf-life information via, for example, RFID, an input unit can be omitted. Therefore, the machine can be set into an operation mode faster, and is more convenient to operate.

According to claim 1 the control means are adapted to continuously decrease the value of the shelf-life counter in the product mode, wherein the beverage production machine further comprises a display, wherein the display has a shelf-life indicator for displaying the value of the shelf-life counter, and wherein the display has an alarm indicator for issuing a first warning signal, if the shelf-life counter value is below a second threshold value.

As soon as the machine is in the product mode, i.e. the product has been identified, and the shelf-life counter has been set, a portion of the product can be dispensed and a continuous decrease of the value of the shelf-life counter ensures that an automatic monitoring of the expiration date is carried out by the machine. The shelf-life indicator is optional and can further provide the user with the relevant information on the expiration date of the product, and optionally the warning can be issued as soon as the counter value falls below a second threshold value. The warning warns the user of the necessity to clean the reservoir soon, and to fill in a new product or a product from a new container.

Preferably, the beverage production machine further comprises a temperature sensor for measuring the temperature of the product in the reservoir, wherein the display has a temperature indicator for showing the measured temperature, and wherein the alarm indicator is adapted to issue a second warning signal, if the measured temperature is above a first threshold temperature.

The temperature sensor can ensure that the product is held constantly at a low enough temperature, so that the product does not get spoiled, before its nominal expiration date is reached, i.e. before the shelf-life counter value reaches the first threshold value. An unwanted increase in temperature can for example occur, if the cooling means do not function properly or if the beverage production machine is positioned badly, e.g. close to a radiator or exposed to sunshine. The temperature indicator is optional. The warning signal is preferably issued as soon as the temperature exceeds a certain measured temperature, i.e. above a first threshold temperature, that is still low enough that the shelf-life information of the product maintains its validity.

The reservoir has an opening and a lockable lid for exposing or covering the opening, wherein the control means are adapted to detect and control the lock state of the lid, and wherein the display has a lid indicator for indicating whether the lid is locked or unlocked.

Due to the fact that the lid can be locked, the refilling of a product can only be carried out, if a product has been identified successfully, wherein the identification unlocks the lid. The beverage production machine can show optionally on the display, whether the lid is locked or not. The opening is preferably constructed in a way that a product can be filled in easily, i.e. without spilling any product, for example by matching or adapting the opening to the mouth of the container, in which the product is purchased.

Preferably, the control means are adapted to set the product mode of the beverage production machine, wherein in the product mode the cooling means are activated, the lid is locked, the temperature indicator is activated, and the shelf-life counter and the shelf-life indicator are activated.

In the product mode the cooling means ensure that the product is cooled to a sufficiently low temperature that guarantees that the shelf-life information of the product is valid. For monitoring purposes the indicators and the counter are naturally turned on during the product mode. The lid is locked, and a filling can only be carried out, if the product mode is interrupted, new identification information is successfully provided, and finally the product mode is resumed.

Preferably, the control means are adapted to set a standby mode of the beverage production machine, wherein in the standby mode the cooling means are not activated, the temperature indicator is not activated, and the shelf-life counter and the shelf-life indicator are not activated.

The standby mode is a mode, in which the machine is clean (has just been cleaned), is ready to be filled with a product, and is ready to start a new product mode cycle. To save energy the cooling means are not activated, and since no shelf-life information of the product has yet been provided, i.e. received by the machine, the respective indicators and the shelf-life counter are turned off.

Preferably, the control means are adapted to set a cleaning mode of the beverage production machine, wherein in the cleaning mode the cooling means are not activated, and the lid is unlocked.

In the cleaning mode the machine has finished a product mode cycle, that means the shelf-life of the product has expired and the machine is required to be cleaned. Therefore, the lid naturally has to be unlocked. After cleaning the machine can go back to the standby mode.

Preferably, the control means are adapted to set the product mode of the beverage production machine, if the product is identified based on the identification information in the data received by the RFID reader.

The connection of the product mode with the requirement of a valid identification of the product guarantees that no unknown product, for which consequently the shelf-life is not known, is used. This strongly improves the hygiene in the machine.

Preferably, the control means are adapted to automatically set the cleaning mode of the beverage production machine, if the value of the shelf-life counter is equal to or lower than the first threshold value.

If the shelf-life of the product has expired, the machine is automatically set into cleaning mode. The cleaning mode can only be left, if the reservoir is cleaned and if a new product is filled into the reservoir. Thus the machine guarantees that never any beverage is produced from a product whose shelf-life has expired.

Preferably, the control means are adapted to detect a removal of the reservoir, and to set the standby mode of the beverage production machine, only if the reservoir has been removed for longer than a first threshold period.

The machine thus ensures that the reservoir is really cleaned. Only then can the product mode be entered again from the standby mode and the refilling procedure can be carried out. Naturally other means to detect that the reservoir has been really removed and/or cleaned can be implemented. Suitable sensors could even distinguish directly between a clean state and a used state. For example a light source or light sensor could be used to detect product residues.

Preferably, the control means are adapted to automatically set the cleaning mode of the beverage production machine, if the measured temperature is above a second threshold temperature for longer than a second threshold period.

After the product has been above a certain temperature for too long, the validity of the shelf-life information can no longer be guaranteed. By setting the machine into the cleaning mode, the user is required to clean the reservoir and to reenter the product mode to refill the product.

The control means are adapted to unlock the lid for refilling the product in the product mode, if the product to be refilled is identified based on identification information in further data received by the RFID reader.

The refilling takes place in the product mode, and a new product mode cycle can only be entered, if the product is identified and if the shelf-life information is obtained. The identification information of a new product cannot be the same as the identification information of a product previously used, i.e. a container previously used. Specific identification information of a product, i.e. a container, can be used only once to start a product mode. Thus, an accidental or intentional refilling with an unknown or spoiled product from the same container is prevented.

During the product mode, in order to unlock the lid and to refill product, the product mode first has to be interrupted. Then new identification information has to be provided, and the product mode can be resumed without cleaning the reservoir, if both the new shelf-life information and the previous shelf-life information have not yet expired. If the reservoir is filled multiple times during a product mode cycle, all shelf-life information obtained via the RFID reader has to be valid. The value of the shelf-life counter is determined and set according to the shelf-life information that yields the lowest value, i.e. expires the soonest. Only if at a refilling step shelf-life information is detected by the control means, which would correspond to a lower value than the current value, the value of the shelf-life counter is overwritten.

A container for a product comprising an RFID tag for providing data that comprises identification information and shelf-life information of the product in the container is not part of the present invention.

The container is typically suited to hold a larger amount of product, e.g. about 51. The RFID tag of the container can be certified and verified by the distributor of the container. High security standards are preferably used to attach the tag to the container, and to write the information into the tag, so that it is ensured that the information transmitted via the RFID tag really corresponds to the product in the container. The tag cannot be recorded with new information without an authorization code. It could also be thinkable that the container provides means that detect the breaching or opening of the container, and that the identification information and the shelf-life information in the RFID tag are only valid for a predetermined amount of time, after the container have been bridged. The RFID tag might therefore be provided with a counter. The freshness and hygiene standards of the product, when filled into a beverage production machine, can thus be improved.

Preferably, the container further comprises a mouth and a removable cap for covering the mouth, wherein the cap is removable only, if the data is successfully read from the RFID tag by an RFID reader.

Only if the product in the container has been identified and if its shelf-life information has been recorded by a beverage production machine, the product in the container can be used. The cap can be further constructed in a way that it cannot be put back on, or it can be constructed in a way that after the container is emptied, it cannot be refilled anymore.

The present invention further is directed to a beverage production method as defined in claim 12.

In summary the present invention increases the hygiene standards of a beverage production machine or method, and prevents the production of a beverage from a product, which is unknown or is spoiled. The product cannot be kept in a machine longer than its shelf-life. The machine is convenient to use, since it takes responsibility of monitoring and receiving the relevant information, in order to keep up the high hygiene standards. The solution of the present invention has a low impact on cost of products and equipment and can thus ensure business profitability.

In the following the present invention is explained in more detail in relation to the attached figures and drawings.
Figure 1a shows a beverage production machine according to the present invention. Figure 1b shows a container according to the present invention.
Figure 2 shows a display of the beverage production machine of the present invention.
Figure 3 shows a block diagram of the beverage production machine of the present invention.
Figure 4 shows modes of the beverage production machine of the present invention.
Figure 5 shows a mode cycle of the beverage production machine of the present invention.
Figure 6 shows additional modes of the beverage production machine of the present invention.
Figure 7 shows a flow diagram of a beverage production method of the present invention.
Figure 8 shows a refilling process from a container to the beverage production machine of the present invention.

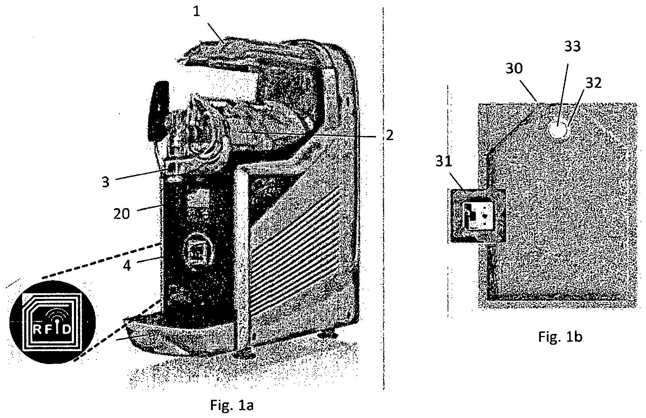

Figure 1a shows a beverage production machine 1 according to the present invention. The beverage production machine 1 can generally be designed similar to known beverage production machines 1, in that it has a housing, a plurality of feet, a dip tray, one or more ventilation openings, a power supply, etc. as illustrated. The beverage production machine 1 can, however, have a different design, shape or arrangement of features compared to the machine shown in figure 1a. What is essential is that the beverage production machine 1 comprises a removable reservoir 2 for holding a product, like a solid, semi-liquid or liquid product.

The reservoir 2 can be any suitable tank material, e.g. glass, Perspex, metal or plastic, that is able to hold typical products. The reservoir 2 can be provided with one or more coating layers that make it easy to clean and/or isolate the product from the reservoir material for improving hygiene. The one or more coating layers can further help to insulate the product against the outside temperature, or to protect it from light. The reservoir 2 is preferably removable from the beverage production machine 1, but could be designed in a way so that it cannot be removed during the operation, i.e. during the product mode, of the machine 1, or so that it can only be removed in a specific mode of the beverage production machine 1. Various machine modes will be described later.

The product in this case is preferably a premixed product for ice cream, a frozen milk product, a sorbet, frozen fruit juice product, or any other cooled or frozen liquid, solid, or semi-liquid product or food known in the art. However, the idea of the present invention is not limited to such beverage products, and can also be applied for classical coffee machines, coffee machines that work with capsules, tee machines, beer dispensers, fruit juice or lemonade dispensers or the like. The beverages produced from the product need not necessarily be cooled or frozen. Also for heated beverages shelf-life information could be monitored according to the present invention.

The reservoir 2 has a dispenser 3 that is connected to the reservoir 2, and is adapted to open and close an outlet from the reservoir 2. Thus, a portion of the product can be dispensed through the dispenser 3. The dispenser 3 can be an electrically or mechanically operated dispenser 3. It can also be a hand-operated dispenser 3, like a tap device or a screw cap. Further, it can allow any desired portion of the product to be dispensed. Alternatively, it can be controlled to dispense predetermined portions of the product. The dispenser 3 can further be provided with filters, for example to increase the hygiene of the dispensed beverage, or to prevent ice particles or ice cubes from being dispensed with the product. The dispenser 3 can also be equipped with means to froth the dispensed product, e.g. by a suitable filter or other frothing means. The dispenser 3 can be mechanically blocked or electrically deactivated, as long as the machine 1 is not in the product mode. The dispenser 3 can be integrated with the reservoir 2, or can be fixed to the housing of the machine 1, so that the reservoir 2 is individually removable from the beverage production machine 1. The dispenser 3 is, however, preferably removable form the beverage production machine 1 as well, for cleaning purposes.

The beverage production machine 1 is further equipped with cooling means 5 and optionally with agitating means 6. Both the cooling means 5 and the agitating means 6 can be provided inside of the removable reservoir 2, but are preferably provided in a way that the removable reservoir 2 can be removed without removing the cooling means 5 and the agitating means 6. This makes it easier to clean and refill the reservoir 2.

The cooling means 5 are used to cool or freeze the product. Preferably, temperatures in a range of -5° to +10°, more preferably -10° to +20° can be reached. The cooling means 5 can be conventional refrigeration devices or freezers as in conventional ice machines or beverage production machines for frozen beverages. The cooling means 5 preferably cool the product via cooling of the reservoir 2. It is thus desired that the reservoir 2 is made of a high thermal conductivity and a low heat capacity material, so that the product can be cooled efficient and rapid. The cooling means 5 is further preferably thermally isolated against the rest of the machine 1 to efficiently cool the product.

The agitating means 6, or an agitator, are used to stir or agitate or mix the product, in order to ensure a homogeneous composition of the product, and to ensure the homogeneity of the temperature of the product. The agitating means 6 can be for example a rotating stirrer or mixer with one or more blades that stir the product. The stirrer is inserted into the reservoir 2, when the reservoir 2 is attached to the machine 1. The agitating means 6 in the reservoir 2 can also be driven magnetically or in an otherwise contactless manner, so that no bore or hole to the outside of the reservoir 2 have to be provided. Even when sealed, the product could exit the reservoir 2 in the machine 1 through such a bore and compromise the hygiene. The agitating means 6 could also be provided from the top, e.g. through the opening 10 of the reservoir 2. The agitating means 6 can also be realized by means that constantly shake, rotate or turn the reservoir 2 to agitate the product. With such a solution, no agitating means 6 would have to be inserted into the product, thus increasing the hygiene.

The beverage production machine 1 further has an antenna structure, preferably an RFID reader 4, which can communicate with other external antenna structures, preferably RFID tags 31, via magnetic or electromagnetic coupling, and can receive and send data from/to the RFID tags 31. The RFID reader 4 is at least able to read out data from an RFID tag 31 via wireless magnetic coupling. An example of an RFID tag 31 is shown in figure 1b. The RFID tag 31 can for example be integrated securely into a container 30, in which the product that is to be filled into the reservoir 2 is purchased. By holding the RFID tag 31 in close proximity to the RFID reader 4, coupling and a data communication between the RFID elements can be carried out.

The electromagnetic waves, which are utilized to wirelessly couple the RFID reader 4 to RFID tags 31 and to read out the RFID tag 31, preferably have a frequency of 30 kHz to 3 GHz. The power of the electromagnetic waves should allow for data transmission across a distance of preferably at least 5 to 50 cm. The electromagnetic waves can have linear or circular polarization. In particular circular polarization can facilitate the data transmission, because the tag 31 can be positioned in front of the RFID reader 4 in an arbitrary orientation. Linear polarization requires specific positioning but can increase the signal to noise ratio and thus the distance.

The beverage production machine 1 further has control means 7 that control, amongst other functions, the communication process of the RFID reader 4. The control means 7 can be a suitable processor or a micro processor or a similar calculating or processing unit. The control means 7 can be further equipped with a memory, for example a RAM or a ROM, to store temporarily or permanently data that is necessary to perform the data communication. For example, the memory can store certain identification numbers of different RFID tags, with which a communication can be allowed, or can store an algorithm for an authentication procedure that is performed before reading out an RFID tag. The control means 7 can also b e an array of processors, where each processor is specifically designed to control a certain function of the machine 1.

The RFID reader 4, under control of the control means 7, acquires from the RFID tag 31, optionally after an authentication procedure has been carried out between the control means 7 and the RFID tag 31, at least identification information and shelf-life information of the product in the container 30. The received data can also include further information on the product, for example information on flavor, amount, quality grade, price, the producer or distributor of the product, the filling date, the expiry date, optimum production parameters, optimum temperature parameters or the like.

When the RFID reader 4 has received the data, the control means 7 can store and/or evaluate the received data. In particular, the control means 7 are able to identify the product based on the identification information received with the data. The identification can be carried out for example based on pre-stored numbers or pre-stored information, with which the control means 7 compare the identification information. Alternatively, it can be carried out through a pre-stored algorithm that returns a "valid" or "invalid" identification result.

The data communication between the RFID reader 4 and the RFID tag 31 is preferably designed in a way that each RFID tag 31 can be read out only once, or at least in a way that specific identification information can be used only once, at least can be used only once for starting the product mode of the machine 1. This can be realized, for example, by storing previously acquired identification information permanently into the memory, and by comparing - each time new identification information is obtained - the acquired information with the information stored in the memory. Only if newly acquired identification information is found not to be stored in the memory, the product is validly identified by the control means 7.

The control means 7 further evaluate the shelf-life information, and store the relevant shelf-life information in a memory. The control means 7 can further calculate the expiry date, and store the same in a memory. The control means 7 further have a shelf-life counter 8, which is set to a value according to the shelf-life information. Alternatively the control means 7 are connected to such a shelf-life counter 8. Shelf-life information can for example be a number of days, to which the shelf-life counter is set. The shelf-life information is however not limited thereto, but can be a number of hours or minutes until expiry, or can be a certain calendar expiration date. The machine 1 can also comprise several shelf-life counters 8 that are associated with different types of shelf-life information. The shelf-life counter 8, for example, decreases its value continuously, independently or under direct control of the control means 7, if the shelf-life information is e.g. a remaining number of days, weeks or months. If the shelf-life information is a different value, the shelf-life counter 8 could also continuously increase its value. In the following description, however, only examples of decreasing the value of the shelf-life counter are explained, but the skilled person will easily understand how to implement the same invention with a continuously increasing shelf-life counter value.

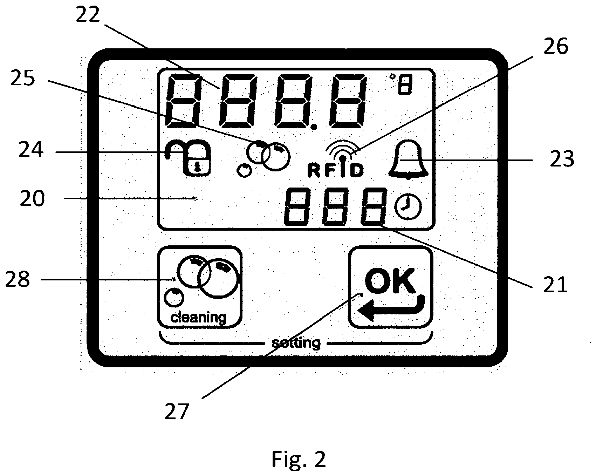

The beverage production machine 1 shown in figure 1a further comprises a display 20. The display 20 is shown in more detail in figure 2, and has for example a shelf-life indicator 21 for displaying the value of the shelf-life counter 8, has a temperature indicator 22 for showing the temperature of the product in the reservoir 2 (the temperature is measured with the temperature sensor 9), comprises an alarm indicator 23 for issuing warning signals, has a lock signal 24 indicating whether a lockable lid 11 covering an opening 10 of the reservoir 2 is locked or unlocked, comprises an RFID indicator 26 for showing whether currently a data communication to and/or from the RFID reader 4 is carried out, and comprises a cleaning indicator 25 for indicating that the reservoir 2 has to be cleaned, i.e. the machine 1 is in the cleaning mode. The display 20 does not necessarily need to comprise all of the above indicators. However, the display 20 is also not limited only to the above-described indicators.

A control panel could also be installed in or on the display 2, and can consist of at least a cleaning button 28 and a confirmation button 27. The buttons 27 and 28 can also be arranged at positions different from the position of the display 20 on the beverage production machine 1.

In figure 1a is shown how the display 20 and the RFID reader 4 are preferably located on the front of the beverage production machine 1. However, the invention is not limited thereto, and the display 20 and the RFID reader 4 can also be located on the top, the side or the back of the beverage production machine 1. They can also be arranged on different sides of the machine 1. It has to be only ensured that the display 20 is easy to read for a user. The RFID reader 4 can also be inside the beverage production machine 1, i.e. can be hidden from sight. However, even in this case preferably a symbol, as shown in figure 1a, is provided to indicate to the user, where to preferably hold the tag 31 of a container, in order to perform a data transmission.

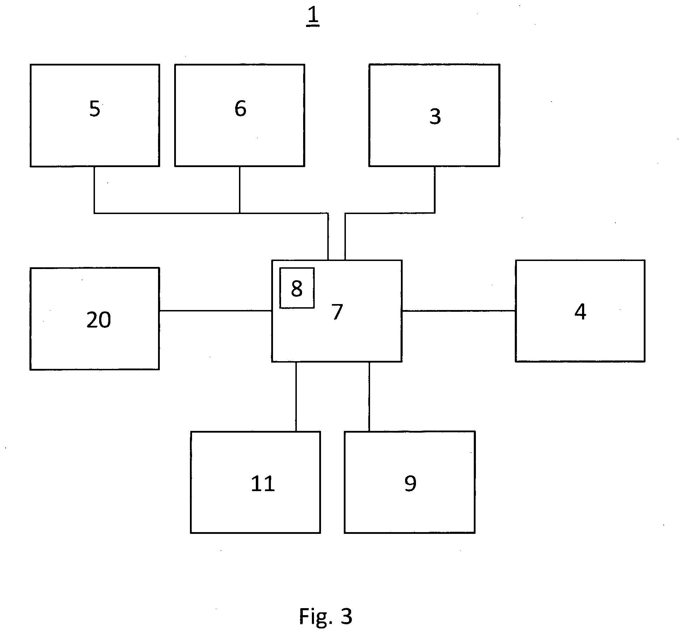

Figure 3 shows a block diagram of the beverage production machine 1, and shows how the control means 7 control the operation of the beverage production machine 1. The control means 7 are wired or connected wirelessly to the cooling means 5, the agitating means 6 and the dispenser 3, in order to operate them when necessary. The control means 7 can also receive feedback from the means 5, 6 and 3, for example in case one of the means has a malfunction. The control means 7 are further wired or connected wirelessly to the temperature sensor 9, and can continuously or repeatedly receive temperature readings from the sensor 9. The control means 7 can use the temperature readings of the temperature sensor 9 to control the cooling means 5 of the machine 1. The control means 7 are further connected to the RFID reader 4 and to the display 20, control a data transmission via the RFID reader 4, and control settings and indications of the display 20. As shown further, the control means 7 can be provided with the shelf-life counter 8, which can either be integrated into the control means 7 or can be a separate device. The shelf-life counter 8 can be any conventional counter or any clock that is suitable to increase or decrease an analogue or a digital value. Finally, the control means 7 can be connected to the lid 11, respectively a sensor that monitors, whether the lid 11 is closed over the opening 10 of the reservoir 2 or is open. A conventional position sensor can be used for these purposes. The lid 11 can also be integrated with such a sensor.

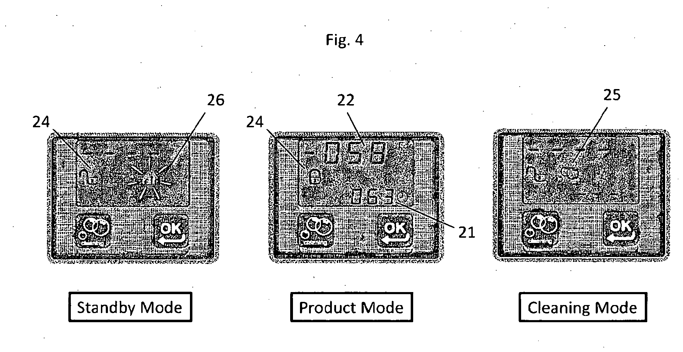

In the following, the operation of the beverage production machine 1 in its relevant operation modes is explained. Figure 4 shows the display 20 in three specific operation modes of the beverage production machine 1. The beverage production machine can be set by the control means 7 into at least a standby mode, a product mode, and a cleaning mode. In the standby mode the machine is clean, is ready to be filled with a product, and is ready for starting a product mode cycle. In the product mode the machine works at least until the shelf-life counter 8 decreases below a first threshold value. In the product mode it is possible to serve beverages by dispensing the product through the dispenser 3. In the product mode the shelf-life counter 8 decreases continuously from an initial value set according to the shelf-life information, and as soon as the first threshold value is reached the product mode is exited to the cleaning mode. In the cleaning mode the machine has finished a product mode cycle, for example, because the shelf-life counter 8 has reached the first threshold value and needs to be cleaned.

In the standby mode the cooling means 5 do not work, the agitating means 6 are stopped, and both the temperature indicator 22 and the shelf-life indicator 21 are inactive. As shown in the left picture of figure 4, the RFID indicator 26 is emitting a signal, for example it flashes or blinks, and indicates that an identification and a data transmission with an RFID tag has to be carried out. The lid indicator 24 indicates in this case that the lid 11 is still unlocked, and that the machine is ready to be (re)filled. The standby mode of the beverage production machine 1 is always set, when the machine 1 is switched on, or after a cleaning mode of the machine 1 has been exited.

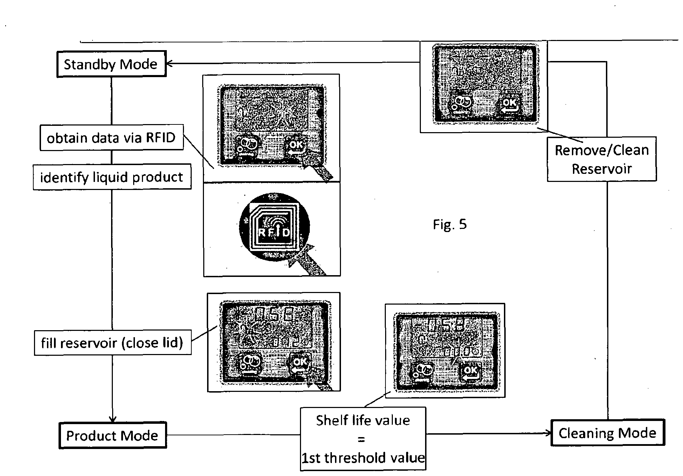

In order to leave the standby mode, as is shown in figure 5, the RFID reader 4 first has to receive data, and the product has to be identified. Therefore the tag 31 of the container 30 has to be brought in proximity with the RFID reader 4, and the confirmation button 27 is optionally to be pressed. The pressing of the button 27 is however not necessarily required, and an automatic detection can take place. Typically the flashing or blinking RFID indicator 26 becomes fixed for a predetermined amount of time, for example two seconds, and after the time has elapsed the data transmission is complete, and the reading is confirmed, for example by an issued acoustic signal like a beep. However, also other signals and indications can be provided.

The control means 7 next identify the product in the container 30 based on identification information included in the received data, and set a value of the shelf-life counter 8 according to the shelf-life information, both received in the data transmission. Now a state on the display 20 shows the current temperature in the reservoir 2, which is measured and monitored by the temperature sensor 9, and shows the value of the shelf-life counter 8. To complete the process of exiting the standby mode the user has to fill product into the reservoir 2, has to close the lid 11, and optionally has to press a confirmation button 27. Then the control means 7 set the beverage production machine 1 into the product mode.

In the product mode the cooling means 5 and the agitating means 6 are always active, the lid 11 is always locked, and the temperature indicator 22 and the shelf-life indicator 21 are always active. Additionally the shelf-life counter 8 continuously decreases the shelf-life value from values set initially according to the shelf-life information. In the product mode a user can operate the beverage production machine 1 to dispense portions of the product through the dispenser 3. Therefore, typical controls, as can be in conventional beverage production machines 1, can be provided. For example the control panel of the machine 1 can be provided with buttons for dispensing differently sized portions of the product, or different types of products. The temperature could additionally be set manually by a user. Alternatively, for reducing a beverage the control means 7 read optimum parameters stored in accordance with the identification information of the product, and produce the portion of the product accordingly.

In the product mode the user can refill the reservoir 2, if it is empty, without cleaning only if the shelf-life counter has not reached the first predetermined threshold value. That means if the product has not reached its expiration date. Therefore, the user operates a dedicated button to interrupt or leave the product mode, then has to provide new identification information for a further product via the RFID reader 4, and finally can resume the product mode after refilling by pressing a dedicated button. Optionally, a specific amount of time can be subtracted from the shelf-life counter value 8, when regarding whether a refilling without cleaning of the reservoir 2 is allowed. This function presents a security buffer. For example, 24 hours could be subtracted, in order to ensure that the shelf-life counter value 8 will not reach the first threshold value for the next full day.

If the value of the shelf-life counter 8 reaches the first threshold value, i.e. is equal to or lower than the first threshold value, the control means 7 automatically set the beverage production machine 1 into the cleaning mode. The first threshold value can for example be zero, i.e. the expiry date of the product has been reached. Alternatively a security buffer can be added to the first threshold value. In the cleaning mode it is necessary to clean at least the reservoir 2. Therefore, the reservoir 2 has to be removed for longer than a first threshold period from the machine 1, for example for a certain number of minutes. The removal presents an indirect indication that the reservoir 2 has been cleaned. The control means 7 can detect the removal of the reservoir 2, for example by a magnetic sensor, a touch sensor, a position sensor or any other suitable sensor. Also direct means to detect whether the reservoir 2 has been cleaned can be employed, e.g. a light sensor that detects residues of product, or a biosensor that can detect the presence of products or alternatively small amounts of a detergent or the like.

After the reservoir has been removed and cleaned, the control means 7 can set the beverage production machine 1 into the standby mode. In the standby mode, in order to refill the product into the reservoir 2, i.e. to unlock the lid 11, a reentering of the product mode is required and a further data transmission process via the RFID reader 4 is necessary. The control means 7 has to evaluate the transmitted data, and has to identify new identification information. Specific identification information of a product, i.e. a container 30 holding the product, can be used only once to enter a product mode of the beverage production machine 1. Only after the control means 7 have identified a new product based on new identification information, and have set the shelf-life counter 8 according to the acquired new shelf-life information, the lid 11 is unlocked, as indicated by the corresponding indicator 24, and the new product can be filled into the reservoir 2. Optionally a control button has to be pressed at the end, so that the product mode can be entered and a new product mode cycle is started.

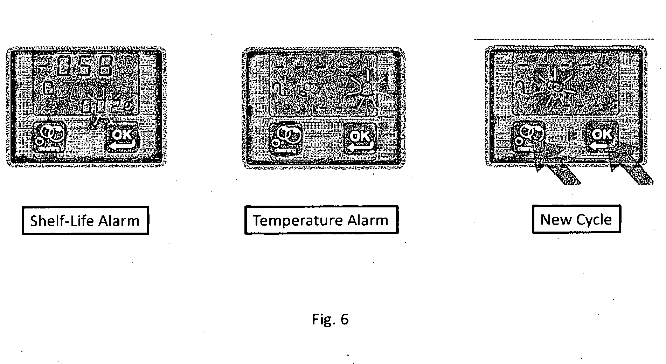

Figure 6 shows additional modes that can improve the hygiene of the beverage production machine 1. The left most picture in figure 6 shows the alarm indicator 23 blinking or in general issuing a warning signal, if during the product mode the value of the shelf-life counter 8 falls below a second threshold value. The shelf-life indicator 21 can emit an optical or acoustic signal, for example it can flash or emit a sound to warn the operator that soon the expiry date of the product will be reached. The alarm mode can be disabled by pressing, for example, the confirmation button 27.

The middle picture of figure 6 shows a case, in which during the product mode, for example due to the lack of electricity or due to a damaged cooling means 5, a second threshold temperature is exceeded for a second threshold period. This second threshold temperature can for example be set to 0 degrees, in case frozen products are to be dispensed. Additionally, or optionally, the control means 7 are adapted to stop the operation of the beverage production machine 1, i.e. to exit the product mode and to enter the cleaning mode, if such an event occurs.

The right picture in figure 6 shows, how a product mode cycle can be ended manually, e.g. if the shelf-life has not yet expired but the product in the reservoir 2 has been completely dispensed. Or, if the shelf-life has not enough remaining time left to allow a safe refilling. Then the user can, for example, press the cleaning button 28 and the confirmation button 27 at the same time, in order to switch the beverage production machine 1 into cleaning mode. Other combinations of buttons or single button functions are also possible. By the way, pushing the same two buttons 28 and 27 in the product mode, could select the scale or the units of the temperature in the temperature indicator 22. For example, Celsius or Fahrenheit could be toggled, or other operating parameters could be adjusted.

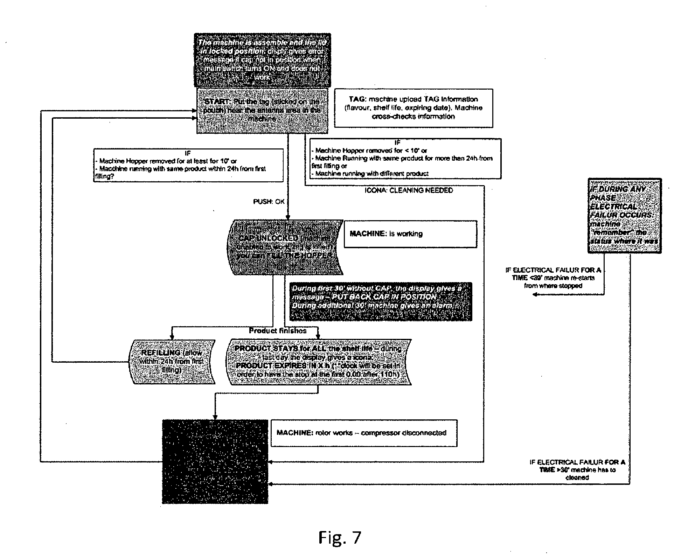

Figure 7 shows a specific example of a work flow diagram of a beverage production method that can be carried out in the beverage production machine 1 of the present invention or by any other suitable device. Values in the following example could also be chosen differently.

Initially the machine is in an assembled state and the lid 11 is in a locked position. The display 20 of the machine 1 indicates an error message, if the cap 33 is not in position when the machine 1 is switched on. The machine 1 also does not work. To start the machine 1 the tag 31 (on the pouch) is to be brought into proximity with the RFID reader 4. Optionally, the confirmation button 27 is to be pressed. The machine 1 uploads information such a flavor, shelf-life and expiry date from the tag 31 and cross-checks the information. A determination is made next, if the machine has worked in a cleaning mode for, for example, at least 10 minutes. In particular, the machine 1 determines, if the reservoir 2 has been removed for at least 10 minutes. The machine 1 also determines at this stage, whether the machine is still running within the first 24 hours measured from the first filling. If the machine 1 determines that the reservoir 2 has not been removed for more than 10 minutes or that the machine 1 has been running for more than 24 hours with the same product from first filling (or a different product from the first filling), the control means 7 set the machine 1 into cleaning mode indicating that the machine has to be cleaned. To clean the machine the cleaning button 28 is now to be pushed twice (once for confirmation). Then the machine 1 is switched off, can be disassembled, and can be cleaned.

However, if at the above determination step the machine 1 determines that the reservoir 2 has been removed for at least 10 minutes or that the machine 1 is still running within the first 24 hours since the first filling with the same product, the cap 11 is unlocked. The unlocking of the cap 11 makes the machine unable to work. The display 20 of the machine indicates that the cap 11 is unlocked. The display 20 can further ask the user during a predetermined time period e.g. for 30 minutes, to put the lid 11 back in the closed position. After the predetermined time period has expired, the machine 1 can issue a warning or an alarm signal, and stops. The tag 31 can be invalidated or blocked for further use. The reservoir 2 can now be filled by a user with a new product..

After filling a product into the reservoir 2, the machine 1 can be operated to dispense the product. At some point two scenarios are possible. One scenario is that the product finishes, i.e. is dispensed completely, and a refilling of the product is still allowed. This can be the case, for example, at any time within the first 24 hours from the first filling of the product. The above-described work flow (starting from providing a tag 31) can in this case be repeated, as shown in fig. 7.

Another scenario is that the product stays in the machine 1, i.e. is not completely dispensed, for its complete shelf-life. That means the shelf-life expires before the product is dispensed completely. At some point, e.g. during the last day of the shelf-life, the display 20 will issue a warning signal. Additionally, the display 20 can e.g. show the remaining time to the expiry of the shelf-life, for example as a countdown. A timer could also be set that determines at which point in time the machine 1 will stop working. Once the shelf-life expires and/or the machine 1 stops, cleaning of the machine 1 becomes necessary. As described above, the cleaning button has to be pressed twice, and the machine 1 can subsequently be cleaned. As shown in fig. 7, once the machine 1 has been cleaned, it can be started again (by providing a new tag 31).

If during any phase of the work flow that has been described with respect to fig. 7 an electrical failure occurs, the machine 1 will remember the status it has been in last. The state of the machine 1 can to this end be continuously saved in a memory during the operation of the machine 1. A timer can be provided with an additional emergency battery so that it can monitor the time, even if an electrical failure occurs. Once the electrical failure is removed, the further operation of the machine 1 depends on the time the machine has been disabled. If the machine has been disabled due to the electrical failure for less than a predetermined failure time, e.g. less than 30 minutes, the machine 1 can resume its operation from where it was stopped by the electrical failure. If the machine has been disabled longer, e.g. longer than 30 minutes, the machine has to be cleaned (cleaning mode).

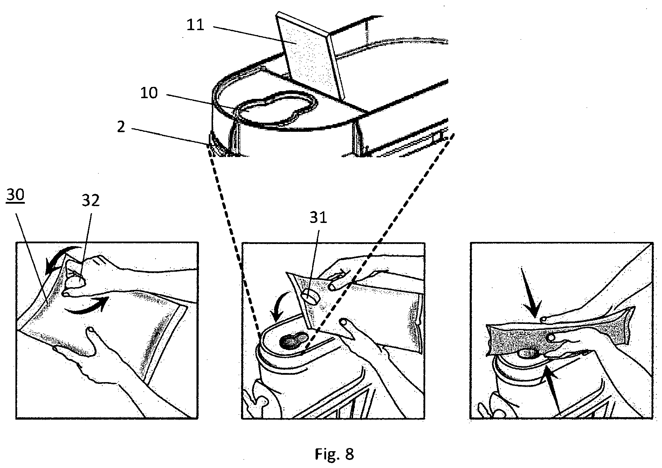

Figure 8 shows how a refilling procedure of the product from a container 30 into the reservoir 2 can be carried out. The container 30 preferably has a mouth 32, which is covered by a cap 33. The cap 33 can, for example, be removed only, if a successful identification of the product according to the identification information that has been transmitted to a beverage production machine 1 is carried out. Once the cap 33 is removed, the container 30 can be attached to the reservoir 2. Therefore, the mouth 32 and the opening 10 of the reservoir 2 can have identical shape, or at least a shape that allows an easy and proper refilling, without product spilling onto the sides or the top of the machine 1. The opening 10 can further have an air inlet, like a bulge or protrusion of the opening to facilitate the refilling procedure of the product. The container 30 is preferably made of a soft squeezable material, like plastic or paper, and the product 30 can be filled into the reservoir 2 by squeezing or otherwise providing pressure to the container 30.

In summary the present invention discloses a beverage production machine 1 and a beverage production method.

The invention aims to improve the hygiene of beverage production. By reading wirelessly identification information and shelf-life information from an RFID tag 31 in the container 30 by an RFID reader 4 of the machine 1, the machine 1 can ensure that only known products are used, and that only products, which have not yet reached their expiration date, are used. The invention further simplifies a monitoring of the shelf-life of a product, and improves the operability, particularly the refilling, of beverage production machines 1.

## Claims

1. Beverage production machine (1) comprising
a removable reservoir (2) for holding a product;
cooling means (5) for cooling the product;
dispensing means (3) connected to the reservoir (2) for dispensing a portion of the product;
an RFID reader (4) for receiving data that comprises identification information and shelf-life information of the product;
control means (7) for identifying the product based on the identification information and for setting a value of a shelf-life counter (8) according to the shelf-life information;
wherein the beverage production machine (1) is operable in a product mode to dispense a portion of the product, if the control means (7) have identified the product and if the value of the shelf-life counter (8) is above a first threshold value;
wherein the control means (7) are adapted to continuously decrease the value of the shelf-life counter (8) in the product mode;
wherein the beverage production machine (1) further comprises a display (20);
wherein the display (20) has a shelf-life indicator (21) for displaying the value of the shelf-life counter (8);
wherein the display (20) has an alarm indicator (23) for issuing a first warning signal, if the shelf-life counter value (8) is below a second threshold value,
wherein the reservoir (2) has an opening (10) and a lockable lid (11) for exposing or covering the opening (10);
wherein the control means (7) are adapted to detect and control the lock state of the lid (11);
wherein the display (20) has a lid indicator (24) for indicating whether the lid is locked or unlocked, and
wherein the control means are adapted to unlock the lid (11) for refilling the product in the product mode, if the product to be refilled is identified based on identification information in further data received by the RFID reader (4).

2. Beverage production machine (1) according to claim 1, further comprising
a temperature sensor (9) for measuring the temperature of the product in the reservoir (2);
wherein the display (20) has a temperature indicator (22) for showing the measured temperature; and
wherein the alarm indicator (23) is adapted to issue a second warning signal, if the measured temperature is above a first threshold temperature.

3. Beverage production machine (1) according to claim 1 or 2,
wherein the control means (7) are adapted to set the product mode of the beverage production machine (1), wherein in the product mode
the cooling means (5) are activated,
the lid (11) is locked,
the temperature indicator (22) is activated, and
the shelf-life counter (8) and the shelf-life indicator (21) are activated.

4. Beverage production machine (1) according to one of the claims 1 to 3,
wherein the control means (7) are adapted to set a standby mode of the beverage production machine (1), wherein in the standby mode
the cooling means (5) are not activated,
the temperature indicator (22) is not activated, and
the shelf-life counter (8) and the shelf-life indicator (21) are not activated.

5. Beverage production machine (1) according to one of the claims 1 to 4,
wherein the control means (7) are adapted to set a cleaning mode of the beverage production machine (1), wherein in the cleaning mode
the cooling means (5) are not activated,
the lid (11) is unlocked.

6. Beverage production machine (1) according to one of the claims 1 to 5,
wherein the control means (7) are adapted to set the product mode of the beverage production machine (1), if the product is identified based on the identification information in the data received by the RFID reader (4).

7. Beverage production machine (1) according to one of the claims 1 to 6,
wherein the control means (7) are adapted to automatically set the cleaning mode of the beverage production machine (1), if the value of the shelf-life counter (8) is equal to or lower than the first threshold value.

8. Beverage production machine (1) according to one of the claims 1 to 7,
wherein the control means (7) are adapted to detect a removal of the reservoir (2), and to set the standby mode of the beverage production machine (1), only if the reservoir has been removed for longer than a first threshold period.

9. Beverage production machine (1) according to one of the claims 2 to 8,
wherein the control means (7) are adapted to automatically set the cleaning mode of the beverage production machine (1), if the measured temperature is above a second threshold temperature for longer than a second threshold period.

10. Beverage production method comprising a beverage production machine according to claim 1, the method further comprising the steps of
obtaining data that comprises identification information and shelf-life information of a product;
identifying the product based on the identification information and monitoring the shelf-life of the product according to the shelf-life information;
filling the product into a reservoir (2);
cooling the product in the reservoir (2);
dispensing a portion of the product;
wherein the dispensing of a portion of the product can be carried out, if the product has been identified and if the shelf-life has not expired.

## Patentansprüche

1. Getränkeherstellungsmaschine (1), umfassend
einen entfernbaren Behälter (2) zum Aufnehmen eines Produkts;
Kühlungsmittel (5) zum Kühlen des Produkts;
mit dem Behälter (2) verbundene Abgabemittel (3) zum Abgeben eines Teils des Produkts;
einen RFID-Leser (4) zum Empfangen von Daten, die Kennzeichnungsinformationen und Haltbarkeitsinformationen des Produkts umfassen;
Steuermittel (7) zum Identifizieren des Produkts auf der Grundlage der Kennzeichnungsinformationen und zum Einstellen eines Werts eines Haltbarkeitszählers (8) gemäß den Haltbarkeitsinformationen;
wobei die Getränkeherstellungsmaschine (1) in einem Produktmodus betriebsfähig ist, um einen Teil des Produkts abzugeben, wenn die Steuermittel (7) das Produkt erkannt haben und wenn der Wert des Haltbarkeitszählers (8) oberhalb eines ersten Schwellenwerts liegt;
wobei die Steuermittel (7) ausgelegt sind, um den Wert des Haltbarkeitszählers (8) im Produktmodus kontinuierlich zu verringern;
wobei die Getränkeherstellungsmaschine (1) ferner eine Anzeige (20) umfasst;
wobei die Anzeige (20) einen Haltbarkeitsindikator (21) zum Anzeigen des Werts des Haltbarkeitszählers (8) aufweist;
wobei die Anzeige (20) einen Alarmindikator (23) zum Ausgeben eines ersten Warnsignals aufweist, wenn der Haltbarkeitszählerwert (8) unterhalb eines zweiten Schwellenwerts liegt,
wobei der Behälter (2) eine Öffnung (10) und einen verriegelbaren Deckel (11) zum Freigeben oder Bedecken der Öffnung (10) aufweist;
wobei die Steuermittel (7) ausgelegt sind, um den Verriegelungszustand des Deckels (11) zu erfassen und zu steuern;
wobei die Anzeige (20) einen Deckelindikator (24) zum Anzeigen aufweist, ob der Deckel verriegelt oder entriegelt ist, und
wobei die Steuermittel ausgelegt sind, um den Deckel (11) zum Nachfüllen des Produkts im Produktmodus zu entriegeln, wenn das nachzufüllende Produkt auf der Grundlage von Kennzeichnungsinformationen in weiteren Daten erkannt wird, die durch den RFID-Leser (4) empfangen wurden.

2. Getränkeherstellungsmaschine (1) nach Anspruch 1, ferner umfassend
einen Temperatursensor (9) zum Messen der Temperatur des Produkts in dem Behälter (2);
wobei die Anzeige (20) einen Temperaturindikator (22) zum Anzeigen der gemessenen Temperatur aufweist; und
wobei der Alarmindikator (23) ausgelegt ist, um ein zweites Warnsignal auszugeben, wenn die gemessene Temperatur oberhalb einer ersten Schwellenwerttemperatur liegt.

3. Getränkeherstellungsmaschine (1) nach Anspruch 1 oder 2,
wobei die Steuermittel (7) ausgelegt sind, um den Produktmodus der Getränkeherstellungsmaschine (1) einzustellen, wobei im Produktmodus
die Kühlungsmittel (5) aktiviert sind,
der Deckel (11) verriegelt ist,
der Temperaturindikator (22) aktiviert ist und
der Haltbarkeitszähler (8) und der Haltbarkeitsindikator (21) aktiviert sind.

4. Getränkeherstellungsmaschine (1) nach einem der Ansprüche 1 bis 3,
wobei die Steuermittel (7) ausgelegt sind, um einen Standby-Modus der Getränkeherstellungsmaschine (1) einzustellen, wobei im Standby-Modus
die Kühlungsmittel (5) nicht aktiviert sind,
der Temperaturindikator (22) nicht aktiviert ist und
der Haltbarkeitszähler (8) und der Haltbarkeitsindikator (21) nicht aktiviert sind.

5. Getränkeherstellungsmaschine (1) nach einem der Ansprüche 1 bis 4,
wobei die Steuermittel (7) ausgelegt sind, um einen Reinigungsmodus der Getränkeherstellungsmaschine (1) einzustellen, wobei im Reinigungsmodus
die Kühlungsmittel (5) nicht aktiviert sind,
der Deckel (11) entriegelt ist.

6. Getränkeherstellungsmaschine (1) nach einem der Ansprüche 1 bis 5,
wobei die Steuermittel (7) ausgelegt sind, um den Produktmodus der Getränkeherstellungsmaschine (1) einzustellen, wenn das Produkt auf der Grundlage der Kennzeichnungsinformationen in den Daten erkannt wird, die durch den RFID-Leser (4) empfangen wurden.

7. Getränkeherstellungsmaschine (1) nach einem der Ansprüche 1 bis 6,
wobei die Steuermittel (7) ausgelegt sind, um den Reinigungsmodus der Getränkeherstellungsmaschine (1) automatisch einzustellen, wenn der Wert des Haltbarkeitszählers (8) gleich oder niedriger als der erste Schwellenwert ist.

8. Getränkeherstellungsmaschine (1) nach einem der Ansprüche 1 bis 7,
wobei die Steuermittel (7) ausgelegt sind, um ein Entfernen des Behälters (2) zu erfassen und den Standby-Modus der Getränkeherstellungsmaschine (1) nur dann einzustellen, wenn der Behälter länger als einen ersten Schwellenwertzeitraum entfernt wurde.

9. Getränkeherstellungsmaschine (1) nach einem der Ansprüche 2 bis 8,
wobei die Steuermittel (7) ausgelegt sind, um den Reinigungsmodus der Getränkeherstellungsmaschine (1) automatisch einzustellen, wenn die gemessene Temperatur länger als einen zweiten Schwellenwertzeitraum oberhalb einer zweiten Schwellenwerttemperatur liegt.

10. Getränkeherstellungsverfahren, umfassend eine Getränkeherstellungsmaschine nach Anspruch 1, wobei das Verfahren ferner die Schritte umfasst
Erhalten von Daten, die Kennzeichnungsinformationen und Haltbarkeitsinformationen eines Produkts umfassen;
Erkennen des Produkts auf der Grundlage von Kennzeichnungsinformationen und Überwachen der Haltbarkeit des Produkts gemäß den Haltbarkeitsinformationen;
Füllen des Produkts in einen Behälter (2);
Kühlen des Produkts in dem Behälter (2);
Abgeben eines Teils des Produkts;
wobei das Abgeben eines Teils des Produkts durchgeführt werden kann, wenn das Produkt erkannt wurde und wenn die Haltbarkeit nicht abgelaufen ist.

## Revendications

1. Machine de production de boisson (1) comprenant
un réservoir amovible (2) pour contenir un produit ;
des moyens de refroidissement (5) pour refroidir le produit ;
des moyens de distribution (3) connectés au réservoir (2) pour distribuer une partie du produit ;
un lecteur RFID (4) pour recevoir des données qui comprennent des informations d'identification et des informations de durée de conservation du produit ;
des moyens de commande (7) pour identifier le produit sur la base des informations d'identification et pour régler une valeur d'un compteur de durée de conservation (8) selon les informations de durée de conservation ;
dans laquelle la machine de production de boisson (1) est fonctionnelle dans un mode produit pour distribuer une partie du produit, si les moyens de commande (7) ont identifié le produit et si la valeur du compteur de durée de conservation (8) est supérieure à une première valeur seuil ;
dans laquelle les moyens de commande (7) sont conçus pour diminuer de façon continue la valeur du compteur de durée de conservation (8) dans le mode produit ;
dans laquelle la machine de production de boisson (1) comprend en outre un affichage (20) ;
dans laquelle l'affichage (20) a un indicateur de durée de conservation (21) pour afficher la valeur du compteur de durée de conservation (8) ;
dans laquelle l'affichage (20) a un indicateur d'alarme (23) pour émettre un premier signal d'avertissement, si la valeur de compteur de durée de conservation (8) est inférieure à une deuxième valeur seuil,
dans laquelle le réservoir (2) a une ouverture (10) et un couvercle verrouillable (11) pour exposer ou couvrir l'ouverture (10) ;
dans laquelle les moyens de commande (7) sont conçus pour détecter et commander l'état de verrouillage du couvercle (11) ;
dans laquelle l'affichage (20) a un indicateur de couvercle (24) pour indiquer si le couvercle est verrouillé ou déverrouillé, et
dans laquelle les moyens de commande sont conçus pour déverrouiller le couvercle (11) pour réapprovisionner le produit dans le mode produit, si le produit à réapprovisionner est identifié sur la base d'informations d'identification dans des données supplémentaires reçues par le lecteur RFID (4).

2. Machine de production de boisson (1) selon la revendication 1, comprenant en outre
un capteur de température (9) pour mesurer la température du produit dans le réservoir (2) ;
dans laquelle l'affichage (20) a un indicateur de température (22) pour montrer la température mesurée ; et
dans laquelle l'indicateur d'alarme (23) est conçu pour émettre un deuxième signal d'avertissement, si la température mesurée est supérieure à une première température seuil.

3. Machine de production de boisson (1) selon la revendication 1 ou 2,
dans laquelle les moyens de commande (7) sont conçus pour régler le mode produit de la machine de production de boisson (1), dans laquelle dans le mode produit
les moyens de refroidissement (5) sont activés,
le couvercle (11) est verrouillé,
l'indicateur de température (22) est activé, et
le compteur de durée de conservation (8) et l'indicateur de durée de conservation (21) sont activés.

4. Machine de production de boisson (1) selon l'une des revendications 1 à 3,
dans laquelle les moyens de commande (7) sont conçus pour régler un mode d'attente de la machine de production de boisson (1), dans laquelle dans le mode d'attente
les moyens de refroidissement (5) ne sont pas activés,
l'indicateur de température (22) n'est pas activé, et
le compteur de durée de conservation (8) et l'indicateur de durée de conservation (21) ne sont pas activés.

5. Machine de production de boisson (1) selon l'une des revendications 1 à 4,
dans laquelle les moyens de commande (7) sont conçus pour régler un mode de nettoyage de la machine de production de boisson (1), dans laquelle dans le mode de nettoyage
les moyens de refroidissement (5) ne sont pas activés,
le couvercle (11) est déverrouillé.

6. Machine de production de boisson (1) selon l'une des revendications 1 à 5,
dans laquelle les moyens de commande (7) sont conçus pour régler le mode produit de la machine de production de boisson (1), si le produit est identifié sur la base des informations d'identification dans les données reçues par le lecteur RFID (4).

7. Machine de production de boisson (1) selon l'une des revendications 1 à 6,
dans laquelle les moyens de commande (7) sont conçus pour régler automatiquement le mode de nettoyage de la machine de production de boisson (1), si la valeur du compteur de durée de conservation (8) est égale ou inférieure à la première valeur seuil.

8. Machine de production de boisson (1) selon l'une des revendications 1 à 7,
dans laquelle les moyens de commande (7) sont conçus pour détecter un retrait du réservoir (2), et pour régler le mode d'attente de la machine de production de boisson (1), uniquement si le réservoir a été retiré pendant plus longtemps qu'une première période seuil.

9. Machine de production de boisson (1) selon l'une des revendications 2 à 8,
dans laquelle les moyens de commande (7) sont conçus pour régler automatiquement le mode de nettoyage de la machine de production de boisson (1), si la température mesurée est supérieure à une deuxième température seuil pendant plus longtemps qu'une deuxième période seuil.

10. Procédé de production de boisson comprenant une machine de production de boisson selon la revendication 1, le procédé comprenant en outre les étapes consistant à
obtenir des données qui comprennent des informations d'identification et des informations de durée de conservation d'un produit ;
identifier le produit sur la base des informations d'identification et surveiller la durée de conservation du produit selon les informations de durée de conservation ;
remplir le produit dans un réservoir (2) ;
refroidir le produit dans le réservoir (2) ;
distribuer une partie du produit ;
dans lequel la distribution d'une partie du produit peut être effectuée, si le produit a été identifié et si la durée de conservation n'a pas expiré.
